# EUROPÄISCHE PATENTSCHRIFT

(11) **EP 1 851 840 B1**
(45) Veröffentlichungstag und Bekanntmachung des Hinweises auf die Patenterteilung: **10.07.2024**
(21) Anmeldenummer: 05707577.2
(22) Anmeldetag: 22.02.2005
(51) Int. Cl.: H02H 3/06, H02H 3/12, H02H 3/38, H05B 41/285, H05B 47/185, H05B 47/21, H02J 3/14

(54) **VERFAHREN ZUR STEUERUNG VON ELEKTRISCHEN VERBRAUCHERN UND ENTSPRECHENDE SCHALTUNGSANORDNUNG**
METHOD FOR CONTROLLING ELECTRICAL CONSUMERS AND CORRESPONDING CIRCUIT ARRANGEMENTS
PROCEDE POUR COMMANDER DES CONSUMMATEURS ELECTRIQUES ET DES DISPOSITIFS DE CIRCUITS CORRESPONDANTS

(43) Veröffentlichungstag der Anmeldung: 07.11.2007
(73) Patentinhaber: Eaton Intelligent Power Limited, Dublin 4 (IE)
(72) Erfinder: PRASUHN, Jürgen, 59494 Soest (DE)
(74) Vertreter: Epping - Hermann - Fischer
(86) Internationale Anmeldenummer: PCT/EP2005/001843
(87) Internationale Veröffentlichungsnummer: WO 2006/089564

(56) Entgegenhaltungen:
- DE-A1- 19 814 366
- US-A- 5 151 631

## Beschreibung

Die Erfindung betrifft ein Verfahren und eine Schaltungsanordnung zur Steuerung mit einer Spannungsversorgung über elektrische Versorgungsleitungen verbundenen elektrischen Verbrauchern. Ein solcher Verbraucher kann beispielsweise eine Leuchte einer Sicherheitsbeleuchtungsanlage sein, wobei solche Leuchten als Rettungszeichen- oder Sicherheitsleuchten bezeichnet werden. Die Spannungsversorgung kann eine entsprechende Wechselspannungsversorgung oder auch eine Gleichspannungsversorgung sein, wobei letztere durch eine Zentral- oder Gruppenbatterieanlage realisiert sein kann.

Die entsprechende Schaltungsanordnung ist zur Überwachung einem jedem Verbraucher zugeordnet und misst zumindest die Spannung der Spannungsversorgung.

In der EP 1 066 690 B1 ist ein entsprechendes Verfahren und eine zugehörige Schaltungsanordnung beschrieben. Danach wird eine Versorgungsspannung zur Übermittlung eines Steuersignals und insbesondere auch zu dessen Kodierung dadurch modifiziert, dass diese einen Spannungsabfall oder eine Spannungsunterbrechung aufweist. Durch das entsprechend kodierte Steuersignal erfolgt eine Beeinflussung des elektrischen Verbrauchers. Ein solcher elektrischer Verbraucher kann beispielsweise eine Notleuchte, Sicherheitsleuchte, Rettungsweganzeigeleuchte oder auch ein Sensor wie Feuersensor, Anwesenheitssensor oder dergleichen sein, wobei solche Verbraucher Teil einer Sicherheitsbeleuchtung- und Sensoranlage sind.

Da in einer solchen Anlage eine Vielzahl von Leuchten oder dergleichen integriert sind, ergeben sich teilweise Schwierigkeiten, um alle diese Leuchten entsprechend zu überwachen. Beispielsweise werden für Leuchten mit Leuchtstofflampen als Leuchtmittel zum Teil vom jeweiligen Hersteller selbst entwickelte elektronische Vorschaltgeräte eingesetzt. Diese können herstellerspezifische Überwachungs- und Lichtbeeinflussungstechnologien verwenden. Auf Grund der Vielzahl vom Markt geforderter EVG-Varianten sind diese nicht alle von dem auf Notbeleuchtung spezialisierten Hersteller lieferbar, sondern es werden auch EVG für Leuchtstofflampen oder elektronische Transformationen für Halogenstrahler von Fremdfirmen eingesetzt. Um die entsprechenden Überwachungs- und Lichtbeeinflussungstechnologien auch für diese Fremdgeräte zu ermöglichen, werden zusätzliche, vorgeschaltete Überwachungseinrichtungen verwendet.

Allerdings hat sich in der Praxis gezeigt, dass bestimmte EVG-Varianten von Fremdherstellern zum Teil sehr sensibel auf Versorgungsspannungsänderungen oder -unterbrechungen reagieren. Dadurch kann im Gefahrenfall die erforderliche Beleuchtung von Rettungswegen oder dergleichen der entsprechenden Sicherheitsbeleuchtungsanlage nicht mehr gewährleistet werden.

Es gibt weiterhin einen Test im Zusammenhang mit EMV-Prüfungen, bei denen bei entsprechender Spannungsunterbrechung oder einem Spannungseinbruch ein Prüfling wie EVG oder elektronischer Transformator bei kurzzeitigen Spannungsänderungen abschalten darf, allerdings durch Wiederanlegen der Netzspannung wieder aktiviert werden muss. Bei einem solchen Verhalten gilt diese Prüfung als bestanden. Hierzu sei übrigens angemerkt, dass dies nur für Allgemeinbeleuchtungen akzeptabel ist, während es für den Einsatz in Sicherheitsbeleuchtungsanlagen nicht akzeptabel ist.

Der Erfindung liegt daher die Aufgabe zugrunde, Verfahren und Schaltungsanordnung dahingehend zu verbessern, dass mit einfachen konstruktiven Mitteln und kostengünstig ein solches Abschalten des entsprechenden Verbrauchers erkannt und insbesondere bei Sicherheitsbeleuchtungsanlagen entsprechende gegenwirkende Maßnahmen schnell ergriffen werden.

Dokument US 5151631 A beschreibt eine Beleuchtungsschaltung für Entladungslampen in Fahrzeugen unter Verwendung einer Gleichstromversorgung. Die Beleuchtungsschaltung umfasst einen AUS-Zustandsdetektor, einen DC-Eingangsspannungsdetektor und eine Leistungsabschalteinrichtung. Der AUS-Zustandsdetektor detektiert einen AUS-Zustand einer Entladungslampe. Der DC-Eingangsspannungsdetektor erkennt, ob eine DC-Eingangsspannung innerhalb eines vorbestimmten Bereichs liegt. Die Stromabschalteinrichtung sperrt die Stromversorgung der Entladungslampe, wenn der AUS-Zustand der Entladungslampe durch den AUS-Zustandsdetektor erfasst wird und die außerhalb des vorbestimmten Bereichs liegende Eingangsgleichspannung durch den Eingangsgleichspannungsdetektor erfasst wird, und lässt die Stromversorgung der Entladungslampe zu, sobald ein Signal empfangen wird, das anzeigt, dass die Eingangsgleichspannung in diesen Bereich zurückgekehrt ist. Eine Spannung über einem stromdurchflossenen Widerstand wird abgegriffen und einem Verstärker zugeführt.

Dokument DE 19814366 A1 befasst sich mit einem Verfahren zur Steuerung wenigstens eines mit einer Steuerungseinrichtung über elektrische Versorgungsleitungen verbundenen elektrischen Verbrauchers. Dabei wird ein Steuersignal über die elektrischen Versorgungsleitungen an den elektrischen Verbraucher übertragen. Eine Daten- oder Signalübermittlung ist auch über große Entfernungen möglich. Dazu erfolgt für eine bestimmte Zeitdauer eine Veränderung der an den elektrischen Verbraucher über die elektrischen Versorgungsleitungen übertragenen Versorgungsspannungen durch die Steuerungseinrichtung zur Kodierung des Steuersignals. Bei der entsprechenden Schaltungsanordnung sind hierzu ein Spannungsabbauelement und/oder eine Schalteinrichtung zur zeitweisen Änderung eines Maximalwertes der Versorgungsspannung und/oder zur zeitweisen Unterbrechung der Versorgungsspannung zugeordnet.

Diese Aufgabe wird durch die Merkmale der unabhängigen Ansprüche hinsichtlich Verfahren bzw. Schaltungsanordnung gelöst.

Erfindungsgemäß wird neben der Spannung zusätzlich der Stromverbrauch des elektrischen Verbrauchers gemessen. Der Stromverbrauch wird als Ist-Stromverbrauch mit einem entsprechendem Soll-Stromverbrauch des elektrischen Verbrauchers verglichen und bei einer Differenz beider Werte grösser als einer vorgegebenen Differenz wird der elektrische Verbraucher zum Reset aus- und anschließend wieder eingeschaltet. Durch den entsprechenden Differenzwert zwischen Soll- und Ist-Stromverbrauch wird festgestellt, dass der elektrische Verbraucher nicht ordnungsgemäß aktiviert ist, weil er sich durch eine entsprechende Minderversorgung mit Spannung ausgeschaltet hat.

Gegebenenfalls wird nicht nur der entsprechende Stromverbrauch gemessen, sondern auch gleichzeitig noch die Spannung, um dadurch Rückschlüsse auf Spannungsunterbrechungen oder Spannungseinbrüche zu erhalten.

Bei den entsprechenden Fremd- EVG, elektrischen Transformatoren und dergleichen als elektrischen Verbrauchern, die insbesondere einer Leuchte zugeordnet sind, erfolgt bei einer solchen Spannungsveränderung eine selbsttätige Abschaltung.

Wie bereits ausgeführt, kann eine solche Spannungsveränderung sowohl durch kurzzeitige Spannungsunterbrechungen als auch durch einen Spannungseinbruch erfolgt sein. Diese führen dann zu einer quasi automatischen Reset-Funktion, die erfindungsgemäß implementiert ist. Durch diese wird das Auftreten des zuvor beschriebenen Fehlers durch Ausschalten der Fremd-EVG oder dergleichen erkannt und dann durch ein definiertes Ausschalten und Wiedereinschalten der Versorgungsspannung dieser Fremd-EVG, der elektronische Transformator oder dergleichen zurückgesetzt. Die entsprechende Spannungsveränderung kann durch Kommunikationstechnologien, Umschaltvorgänge, Schaltvorgänge oder dergleichen erzeugt werden, wobei auch willkürliche kurzzeitige Spannungsveränderungen erkannt werden.

Um sicher zu gehen, dass die entsprechende Spannungsänderung nicht mehr vorliegt, kann die Überwachungsschaltungsanordnung die Spannungsversorgung nach dem Ausschalten bis zum Einschalten des Verbrauchers für eine vorgegebene Zeitdauer unterbrechen. Eine solche Zeitdauer kann bis zu einer oder mehreren Sekunden und vorzugsweise bis zu 500 ms betragen, wobei die Mindestzeitdauer 50, 100 oder auch 200 ms beträt.

Eine solche Zeitdauer ist ausreichend, um einen Neustart des entsprechenden Geräts zu veranlassen und den bestimmungsgemäßen Betrieb oder Zustand wieder herzustellen.

Bei der erfindungsgemäßen Schaltungsanordnung weist diese eine zwischen den elektrischen Versorgungsleitungen und dem elektrischen Verbraucher angeordnete Strommesseinrichtung und eine Vergleichseinrichtung zum Vergleich eines Strom-Istwertes mit einem Strom-Sollwert auf, wobei mittels einer Schalteinrichtung die Spannungsversorgung des elektrischen Verbrauchers unterbrechbar ist.

Vorteilhafterweise kann diese entsprechende Schaltungsanordnung in einem dem elektrischen Verbraucher zugeordneten Überwachungs- und Steuermodul nach EP 1 066 690 B1 enthalten sein.

Werden beispielsweise Fremd-EVG oder Transformatoren verwendet, kann das entsprechende Überwachungs- und Steuermodul diesen vorgeordnet werden, wodurch in einfacher Weise auch von Fremdanbietern bezogene EVG, elektronische Transformatoren oder dergleichen als elektrische Verbraucher in Zusammenhang mit den entsprechenden Leuchten verwendbar sind. Es besteht allerdings auch die Möglichkeit, dass entsprechende Überwachungs- und Steuermodul direkt in dem elektronischen Vorschaltgerät oder Transformator zu integrieren.

Eine einfache Spannungsüberwachungseinrichtung kann darin gesehen werden, wenn diese als im wesentlichen kontinuierlich abgetasteter Spannungsmesser ausgebildet ist. Über diesen Spannungsmesser wird ein entsprechender Spannungseinbruch oder eine Spannungsunterbrechung detektiert.

Um den Stromverbrauch ausreichend schnell und genau erfassen zu können, kann die Strommesseinrichtung als insbesondere digitales Amperemeter ausgebildet sein.

Die Vergleichseinrichtung kann eine Steuerelektronik mit zumindest einem Mikroprozessor und einer Speichereinrichtung sein. Dadurch können beispielsweise entsprechende Soll-Stromwerte abgelegt und mit den entsprechenden Ist-Stromwerten verglichen werden. Gleichzeitig kann durch die Steuerelektronik auch die sonstige Steuerung der Überwachung des elektrischen Verbrauchers sowie der Datenaustausch mit einer Zentrale oder dergleichen erfolgen.

Es sind verschiedene Beispiele für entsprechende Schalteinrichtungen denkbar. Ein Beispiel ist ein durch die Steuerelektronik gesteuertes Relais oder eine durch die Steuerelektronik gesteuerte Halbleiter-Schalteinrichtung. Eine solche Schalteinrichtung kann durch MOS- FET, IGBT oder dergleichen realisiert werden.

Um in sicherer Weise einen Reset von EVG für eine Leuchtstofflampe oder elektronischen Transformator für eine Halogenlampe bei entsprechendem Spannungseinbruch oder Spannungsunterbrechung durchführen zu können, kann die von der Schaltungsanordnung durchgeführte Spannungsunterbrechung eine Zeitdauer von 100-1000 ms, vorzugsweise 200-500 ms aufweisen.

Die entsprechenden Ist-Stromwerte, die von der Schaltungsanordnung gemessen werden, werden außerdem ausgewertet und anschließend festgestellt, ob ein entsprechender Soll-Betriebszustand des EVG oder elektronischen Transformators mit dem vom EVG aufgenommenen Strom und dem daraus ableitbaren Ist-Betriebszustand übereinstimmen. Stimmen diese Betriebszustände nicht überein, erfolgt dann durch Betätigung der Schalteinrichtung eine Versorgungsspannungsunterbrechung für eine bestimmte Zeitdauer. Diese Spannungsunterbrechung reicht dabei aus, um einen Neustart (Reset) des EVG zu veranlassen und den bestimmungsgemäßen Betriebszustand wieder herzustellen.

Erfindungsgemäß ist daher sichergestellt, dass der sicherheitsrelevante Betrieb der entsprechenden Sicherheitsbeleuchtungsanlage auch bei einer kurzzeitigen Versorgungsspannungsänderung oder -unterbrechung und einer daraus sich ergebenden EVG-Abschaltung wieder gewährleistet ist, in dem die Versorgungsspannungsunterbrechung zum Zurücksetzen (Reset) des EVG führt und anschließen wieder ein ordnungsgemäßer Betrieb möglich ist. Dadurch erfolgt in einfacher und kostengünstiger Weise eine Anpassung von EVG, elektronische Transformatoren oder dergleichen, so dass auch diese in einer als Sicherheitsbeleuchtungsanlage mit den Notlichthersteller - spezifischen überwachungs- und Lichtbeeinflussungstechnologien verwendbar sind.

Im Folgenden wird die Erfindung anhand der in der Zeichnung beigefügten Figuren näher erläutert.

Es zeigen:
- Figur 1: eine Prinzipdarstellung einer teilweise dargestellten Sicherheitsbeleuchtungsanlage mit Spannungsversorgung und Schaltungsanordnung gemäß einem ersten Ausführungsbeispiel der Erfindung;
- Figur 2: eine Darstellung der entsprechenden Schaltungsanordnung im Detail;
- Figuren 3a) bis c): Diagramme zur Darstellung der zur Abhängigkeit der gemessenen Spannung von der Zeit, des gemessenen Stroms von der Zeit und des Ein- und Ausschaltens eines entsprechenden elektrischen Verbrauchers.

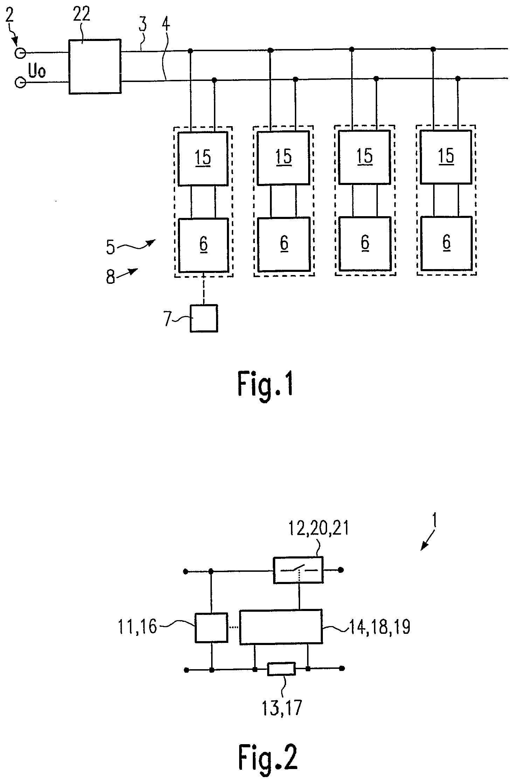

In Figur 1 ist eine Prinzipdarstellung einer Sicherheitsbeleuchtungsanlage 8 mit einer Reihe von elektrischen Verbraucher 5 dargestellt. Jeder dieser elektrischen Verbraucher 5 umfass eine Leuchte 7 und ein zwischen dieser und der elektrischen Versorgungsleitungen 3, 4 angeordnete Überwachungs- und Steuermodul 15 mit zugehörigem elektronischem Vorschaltgerät EVG 6. EVG 6 und Überwachungs- und Steuermodul 15 können in einem Gehäuse integriert sein oder das entsprechende Modul kann auch in dem EVG integriert sein.

Bei einem anderen, nicht dargestelltem Ausführungsbeispiel sind die Leuchten 7 Halogenlampen, wobei statt des EVG ein elektronischer Transformator eingesetzt wird.

Die elektronischen Versorgungsleitungen 3, 4 versorgen eine Vielzahl solcher elektrischen Verbraucher 5, die über die Versorgungsleitungen mit einer zentralen Steuereinrichtung 22 verbunden sind. Über diese erfolgt die Versorgung mit Spannung von einer Spannungsversorgung 2. Diese kann eine Wechselspannungsversorgung oder auch eine Gruppen- oder Zentralbatterieanlage sein.

Über die elektrische Versorgungsleitung 2, 4 werden außerdem Daten ausgetauscht, indem beispielsweise die Versorgungsspannung in ihrem Maximalwert variiert wird und/oder Unterbrechungen in der Versorgungsspannung ausgelöst werden. Diese werden durch die Überwachungs- und Steuermodule 15 detektiert und zur Steuerung der entsprechenden Leuchten 7 eingesetzt. Der Datenaustausch kann auch in umgekehrter Richtung von den Leuchten 7 zur zentralen Steuereinrichtung 22 erfolgen.

Bei solchen Variationen im Maximalwert der Versorgungsspannung beziehungsweise bei Unterbrechung der Versorgungsspannung zeigen einige EVG, elektronischen Transformatoren oder dergleichen als Nachteil, dass diese sensibel auf solche Variationen der Versorgungsspannung reagieren und sich gegebenenfalls ausschalten. Dadurch sind sie für entsprechende Überwachungs- und Lichtbeeinflussungstechnologien, die für Sicherheitsbeleuchtungsanlagen 8 erforderlich sind, nicht mehr zugänglich. Ein solche Reaktion von EVG, elektronischen Transformatoren oder dergleichen, kann sich ebenfalls einstellen, wenn eine Schaltung auf Sicherheitsstromversorgung, das heißt eine Umschaltung von Wechselstromspannung auf Gleichspannung oder auch umgekehrt erfolgt. Dabei ergibt sich in der Regel eine Spannungslücke von bestimmter Dauer, die zum Ausschalten dieser Einrichtungen führen kann. Dadurch sind im Gefahrenfall gegebenenfalls einige Leuchten nicht funktionsfähig, die für die erforderliche Beleuchtung der Rettungswege nötig wären.

Das Überwachungs- und Steuermodul 15 enthält aus diesem Grunde eine Schaltungsanordnung 1, siehe beispielsweise Figur 2. Mittels dieser Schaltungsanordnung 1 wird über eine Spannungsüberwachungseinrichtung 11 in Form eines Spannungsmessers 16 und mittels einer Strommesseinrichtung 13 in Form eines Amperemeters 17 sowohl die Versorgungsspannung als auch die von elektronischem Verbraucher (EVG, elektronischen Transformators oder dergleichen) aufgenommenen Stromwerte gemessen. Die entsprechendend gemessenen Werte werden an eine Steuerelektronik 18 mit Mikroprozessor 19 und Speichereinrichtung ermittelt, die zusammen auch die Funktion einer Vergleichseinrichtung 14 übernehmen. So wird einerseits eine Änderung der Spannung mittels des Spannungsmessers 16 und andererseits eine Veränderung im Stromwert mittels der Strommesseinrichtung 13 detektiert.

Die Spannung wird dabei kontinuierlich abgetastet. Bezüglich des Stroms erfolgt ein Vergleich mit einem Soll-Stromwert des EVG, um festzustellen, ob ein entsprechender Soll-Betriebszustand dieses Bauteils vorliegt, der mit einem vom EVG aufgenommenen Strom und daraus ableitbarem Ist-Betriebszustand des Bauteils verglichen wird.

Stimmt dieser Ist-Betriebszustand nicht mit dem Soll-Betriebszustand überein, so veranlasst der entsprechende Mikroprozessor 19 der Steuerelektronik 18 durch kurzzeitiges Öffnen einer entsprechenden Schalteinrichtung 12 eine Unterbrechung der Versorgungsspannung. Die Schalteinrichtung 12 kann beispielsweise ein Relais 20 oder eine Halbleiterschalteinrichtung 21 sein, wobei letztere durch Transistoren, MOS-FET, IGBT oder der gleichen realisiert wird. Die Versorgungsspannungsunterbrechung erfolgt für eine relativ kurze Zeit zwischen beispielsweise 200 ms und 500 ms. Die Versorgungsspannungsunterbrechung reicht aus, um bei erneuter Versorgung mit Spannung einen Neustart des EVG, elektronischen Transformators oder dergleichen zu veranlassen und den erforderlichen Soll-Betriebszustand wiederherzustellen.

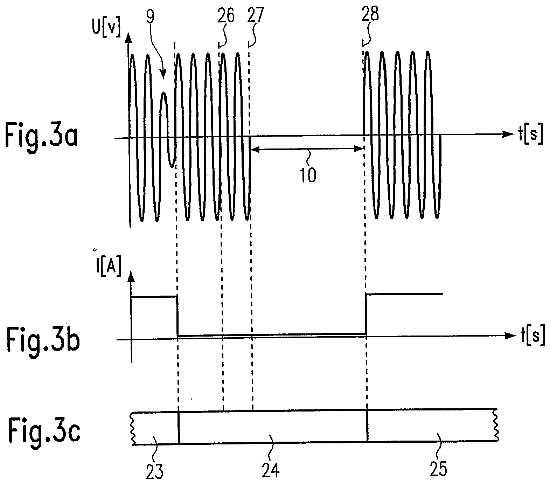

Der zeitliche Ablauf eines solchen Vorgangs wird im folgenden im Zusammenhang mit Figur 3 erläutert.

Im oberen Diagramm nach Figur 3, siehe a), ist die Versorgungsspannung U in Abhängigkeit von der Zeit t dargestellt. Bei "9" erfolgt ein Spannungseinbruch. Dieser führt nach dem Diagramm 3b) zu einem Ausschalten des EVG. Dies wird durch die Steuerelektronik 18 mittels der Strommesseinrichtung 13 gemessen, wobei der entsprechende vom EVG aufgenommene Strom I bis auf Null abnimmt. Im Diagramm der Figur 3c) sind zugehörig zu den entsprechenden Stromwerten die Ein- und Ausschaltzustände des EVG dargestellt, wobei in den Bereichen 23 und 25 das EVG ein- und im Bereich 24 ausgeschaltet ist. Die Steuerelektronik 18 erfasst nicht nur den Spannungseinbruch 9, sondern auch, wie vorstehend erwähnt, die fehlende Stromaufnahme des EVG zum Zeitpunkt 26. Zum Zeitpunkt 27 wird als Reaktion auf diese Messungen die Versorgungsspannung ausgeschaltet. Nach Warten einer vorgehenden Zeitdauer 10 in der Größenordnung von beispielsweise 200 bis 500 ms folgt ein Einschalten der Versorgungsspannung zum Zeitpunkt 28. Durch dieses Einschalten der Versorgungsspannung wird ebenfalls das EVG wieder eingeschaltet, siehe 25 im Diagramm nach Figur 3c). Entsprechend erfolgt auch wieder der Stromfluss nach Figur 3b).

Erfindungsgemäß ergibt sich somit als zusätzliche Funktion, den sicherheitsrelevanten Betrieb einer Sicherheitsbeleuchtungsanlage auch bei kurzzeitigen Versorgungsspannungsänderungen durch Einbruch oder Unterbrechung und der sich daraus ergebenden

EVG-Abschaltung weiterhin zu gewährleisten, wobei durch das entsprechende Versorgungs- und Steuerungsmodul eine definierte Spannungsunterbrechung zum Reset der EVG-Abschaltung führt. Dadurch wird immer der entsprechende Ist-Betriebszustand des EVG, elektronischen Transformators oder dergleichen überwacht und mit einem Soll-Betriebszustand anhand der entsprechenden gemessenen Stromwerte verglichen. Sobald entsprechende Abweichungen der Betriebszustände erfasst werden, erfolgt ein kurzzeitiges Öffnen der entsprechenden Schalteinrichtung und damit eine Unterbrechung der Versorgungsspannung. Erst bei Wiederzuführung der Versorgungsspannung erfolgt dann der Neustart des Bauteils, so dass der erfindungsgemäße Soll-Betriebszustand wieder hergestellt ist.

## Patentansprüche

1. Verfahren zur Überwachung und Steuerung eines einem Leuchtmittel vorgeschalteten elektronischen Vorschaltgerätes, abgekürzt EVG, (6) mittels eines Überwachungs- und Steuermoduls (15) mit einer Schaltungsanordnung (1), mit den folgenden Schritten:
- Verbinden des Moduls (15) eingangsseitig mit einer Spannungsversorgung (2) und ausgangsseitig mit dem EVG (6);
- Messen der Versorgungsspannung mittels einer Spannungsüberwachungseinrichtung (11) der Schaltungsanordnung (1) ;
- Messen eines Ist-Stromverbrauchs des EVG (6) mittels einer Strommesseinrichtung (13) der Schaltungsanordnung (1);
- Vergleichen des Ist-Stromverbrauchs mit einem Soll-Stromverbrauch mittels einer Vergleichseinrichtung (14) der Schaltungsanordnung (1), und
- Aus- und anschließendes Wiedereinschalten der Versorgungsspannung zum Reset des EVG (6) mittels einer Schalteinrichtung (12) der Schaltungsanordnung (1) bei einem Abweichen des Ist-Stromverbrauchs vom Soll-Stromverbrauch um mehr als eine vorgegebene Differenz,
wobei die Vergleichseinrichtung (14) eine Steuerelektronik (18) mit zumindest einem Mikroprozessor (19) und einer Speichereinrichtung ist, und
wobei von der Steuerelektronik (18) ein entsprechender Soll-Stromwert abgelegt und mit einem entsprechenden Ist-Stromwert verglichen wird.

2. Verfahren nach Anspruch 1,
**dadurch gekennzeichnet,**
**dass** die Schaltungsanordnung (1) die Spannungsversorgung nach dem Ausschalten eines elektrischen Verbrauchers bis zu dessen Einschalten für eine vorgegebene Zeitdauer (10) unterbricht, wobei ein elektrischer Verbraucher (5) eine Leuchte einer Sicherheitsbeleuchtungsanlage ist.

3. Überwachungs- und Steuermodul (15) mit einer Schaltungsanordnung (1) zur Überwachung und Steuerung eines einem Leuchtmittel vorgeschalteten elektronischen Vorschaltgerätes, abgekürzt EVG, (6), wobei das Modul (15) eingangsseitig mit einer Spannungsversorgung (2) und ausgangsseitig mit dem EVG verbindbar ist, und die Schaltungsanordnung (1) eine Spannungsüberwachungseinrichtung (11) zur Messung der Versorgungsspannung, eine Strommesseeinrichtung (13) zur Messung des Ist-Stromverbrauchs des EVG (6), eine Vergleichseinrichtung (14) zum Vergleich des Ist-Stromverbrauchs mit einem Soll-Stromverbrauch und eine Schalteinrichtung (12) zum Aus- und anschließendem Wiedereinschalten der Versorgungsspannung zum Reset des EVG (6) bei einem Abweichen des Ist-Stromverbrauchs vom Soll-Stromverbrauch um mehr als eine vorgegebene Differenz aufweist,
wobei die Vergleichseinrichtung (14) eine Steuerelektronik (18) mit zumindest einem Mikroprozessor (19) und einer Speichereinrichtung ist, und
wobei die Steuerelektronik (18) ausgelegt ist, einen entsprechenden Soll-Stromwert abzulegen und mit einem entsprechenden Ist-Stromwert zu vergleichen.

4. Überwachungs- und Steuermodul (15) nach Anspruch 3, **dadurch gekennzeichnet, dass** das Überwachungs- und Steuermodul (15) mit dem EVG (6) in einem Gehäuse integriert ist.

5. Überwachungs- und Steuermodul (15) nach einem der vorangehenden Ansprüchen 3 oder 4, **dadurch gekennzeichnet, dass** die Spannungsüberwachungseinrichtung (11) als kontinuierlich abtastender Spannungsmesser ausgebildet ist.

6. Überwachungs- und Steuermodul (15) nach einem der vorangehenden Ansprüchen 3 bis 5, **dadurch gekennzeichnet, dass** die Strommesseinrichtung (13) als digitales Amperemeter (17) ausgebildet ist.

7. Überwachungs- und Steuermodul (15) nach einem der Ansprüche 3 bis 6, **dadurch gekennzeichnet, dass** die Schalteinrichtung (12) ein durch die Steuerelektronik (18) gesteuertes Relais (20) ist.

8. Überwachungs- und Steuermodul (15) nach einem der Ansprüche 3 bis 6, **dadurch gekennzeichnet, dass** die Schalteinrichtung (12) eine durch die Steuerelektronik (18) gesteuerte Halbleiter-Schalteinrichtung (21) mit MOS-FET oder IGBT ist.

9. Überwachungs- und Steuermodul (15) nach einem der vorangehenden Ansprüchen 3 bis 8, **dadurch gekennzeichnet, dass** die Zeitdauer zwischen Aus- und Wiedereinschalten der Versorgungsspannung 10 ms - 1000 ms beträgt.

10. Überwachungs- und Steuermodul (15) nach einem der vorangehenden Ansprüchen 3 bis 9, **dadurch gekennzeichnet, dass** die Zeitdauer zwischen Aus- und Wiedereinschalten der Versorgungsspannung 200 ms - 500 ms beträgt.

11. Sicherheitsbeleuchtungsanlage, umfassend
- eine Vielzahl von elektrischen Verbrauchern (5),
- eine zentrale Steuereinrichtung (22),
- elektrische Versorgungsleitungen (3, 4), und
- eine Spannungsversorgung (2),
wobei die elektrischen Versorgungsleitungen (3, 4) die Vielzahl von elektrischen Verbrauchern (5) versorgen,
wobei die Vielzahl von elektrischen Verbrauchern (5) über die elektrischen Versorgungsleitungen mit der zentralen Steuereinrichtung (22) verbunden sind und über diese die Versorgung mit Spannung von der Spannungsversorgung (2) erfolgt,
wobei jeder der Vielzahl von elektrischen Verbrauchern (5) ein Leuchtmittel (7) und ein zwischen dem Leuchtmittel (7) und den elektrischen Versorgungsleitungen (3, 4) angeordnetes Überwachungs- und Steuermodul (15) mit einem zugehörigen elektronischen Vorschaltgerät (6) umfasst,
wobei das Überwachungs- und Steuermodul (15) gemäß einem der Ansprüche 3 bis 10 realisiert ist, und
wobei die elektrischen Verbraucher (5) Notleuchten, Sicherheitsleuchten oder Rettungsweganzeigeleuchten sind.

## Claims

1. A method for monitoring and controlling an electronic ballast (6), abbreviated EVG, connected upstream of a lamp, said method using a monitoring and control module (15) with a circuit arrangement (1) and comprising the following steps:
- coupling the module (15) on the input side to a voltage supply (2) and on the output side to the electronic ballast (6);
- measuring the supply voltage using a voltage monitoring device (11) of the circuit arrangement (1);
- measuring an actual current consumption of the electronic ballast (6) using a current measuring device (13) of the circuit arrangement (1);
- comparing the actual current consumption with a desired current consumption using a comparison device (14) of the circuit arrangement (1), and
- switching the supply voltage off and then on again to reset the electronic ballast (6) using a switching device (12) of the circuit arrangement (1) if the actual current consumption deviates from the desired current consumption by more than a predetermined difference,
wherein the comparison device (14) is a control electronics unit (18) with at least one microprocessor (19) and a memory device, and
wherein a corresponding desired current value is stored by the control electronics unit (18) and is compared with a corresponding actual current value.

2. The method according to claim 1,
**characterized in that**
the circuit arrangement (1) interrupts the voltage supply for a predetermined period of time (10) after an electrical consumer is switched off until it is switched on, wherein an electrical consumer (5) is a luminaire of a safety lighting system.

3. A monitoring and control module (15) with a circuit arrangement (1) for monitoring and controlling an electronic ballast (6), abbreviated EVG, connected upstream of a lamp, wherein the module (15) is connectable on the input side to a voltage supply (2) and on the output side to the electronic ballast, and the circuit arrangement (1) has a voltage monitoring device (11) for measuring the supply voltage, a current measuring device (13) for measuring the actual current consumption of the electronic ballast (6), a comparison device (14) for comparing the actual current consumption with a desired current consumption and a switching device (12) for switching the supply voltage off and then switching on again to reset the electronic ballast (6) if the actual current consumption deviates from the desired current consumption by more than a predetermined difference,
wherein the comparison device (14) is a control electronics unit (18) with at least one microprocessor (19) and a memory device, and
wherein the control electronics unit (18) is configured to store a corresponding desired current value and to compare it with a corresponding actual current value.

4. The monitoring and control module (15) according to claim 3, **characterized in that** the monitoring and control module (15) is integrated with the electronic ballast (6) in a housing.

5. The monitoring and control module (15) according to one of preceding claims 3 or 4, **characterized in that** the voltage monitoring device (11) takes the form of a continuously sampling voltmeter.

6. The monitoring and control module (15) according to one of preceding claims 3 to 5, **characterized in that** the current measuring device (13) takes the form of a digital amperemeter (17).

7. The monitoring and control module (15) according to one of claims 3 to 6, **characterized in that** the switching device (12) is a relay (20) controlled by the control electronics unit (18).

8. The monitoring and control module (15) according to one of claims 3 to 6, **characterized in that** the switching device (12) is a semiconductor switching device (21) with MOS-FET or IGBT and controlled by the control electronics unit (18).

9. The monitoring and control module (15) according to one of preceding claims 3 to 8, **characterized in that** the time period between switching the supply voltage off and on again is 10 ms - 1000 ms.

10. The monitoring and control module (15) according to one of preceding claims 3 to 9, **characterized in that** the time period between switching the supply voltage off and on again is 200 ms - 500 ms.

11. A safety lighting system, comprising
- a plurality of electrical consumers (5),
- a central control device (22),
- electrical supply lines (3, 4), and
- a voltage supply (2),
wherein the electrical supply lines (3, 4) supply the plurality of electrical consumers (5),
wherein the plurality of electrical consumers (5) are coupled to the central control device (22) via the electrical supply lines and are supplied with voltage from the voltage supply (2) via the electrical supply lines,
wherein each of the plurality of electrical consumers (5) comprises a lamp (7) and a monitoring and control module (15) arranged between the lamp (7) and the electrical supply lines (3, 4) with an associated electronic ballast (6),
wherein the monitoring and control module (15) is implemented according to one of claims 3 to 10, and wherein the electrical consumers (5) are emergency lights, safety lights or escape route indicator lights.

## Revendications

1. Procédé de surveillance et de commande d'un appareil de préenclenchement électronique, APE, (6) connecté, en amont d'un moyen d'éclairage au moyen d'un module (15) de surveillance et de commande, à un ensemble circuit (1), comportant les étapes suivantes :
- la connexion du module (15) à une alimentation en tension (2) côté entrée et à l'APE (6) côté sortie ;
- la mesure de la tension d'alimentation au moyen d'un dispositif de surveillance de tension (11) de l'ensemble circuit (1) ;
- la mesure d'une consommation de courant réelle de l'APE (6) au moyen d'un dispositif de mesure de courant (13) de l'ensemble circuit (1) ;
- la comparaison de la consommation de courant réelle avec une consommation de courant de consigne au moyen d'un dispositif de comparaison (14) de l'ensemble circuit (1), et
- la mise hors et la remise sous tension d'alimentation pour réinitialiser l'APE (6) au moyen d'un dispositif de commutation (12) de l'ensemble circuit (1) lorsque l'écart de la consommation de courant réelle par rapport à la consommation de courant de consigne est supérieur à une différence prédéterminée,
dans lequel le dispositif de comparaison (14) est une électronique de commande (18) comportant au moins un microprocesseur (19) et un dispositif mémoire, et
dans lequel une valeur de courant de consigne correspondante est mémorisée par l'électronique de commande (18) et comparée à une valeur de courant réelle correspondante.

2. Procédé selon la revendication 1,
**caractérisé en ce**
**que** l'ensemble circuit (1), après la désactivation d'un consommateur électrique jusqu'à son activation, interrompt l'alimentation en tension pendant une durée (10) prédéterminée, dans lequel un consommateur (5) électrique, est un éclairage d'une installation d'éclairage de sécurité.

3. Module (15) de surveillance et de commande comportant un ensemble circuit (1) permettant de surveiller et de commander un appareil de préenclenchement électronique, APE, (6) connecté en amont d'un moyen d'éclairage, le module (15) pouvant être connecté à une alimentation en tension (2) côté entrée et à l'APE côté sortie, et l'ensemble circuit (1) comprend un dispositif de surveillance de tension (11) permettant de mesurer la tension d'alimentation, un dispositif de mesure de courant (13) permettant de mesurer la consommation de courant réelle de l'APE (6), un dispositif de comparaison (14) permettant de comparer la consommation de courant réelle avec une consommation de courant de consigne et un dispositif de commutation (12) permettant de mettre hors et de remettre sous tension d'alimentation pour réinitialiser l'APE (6) lorsque l'écart de la consommation de courant réelle par rapport à la consommation de courant de consigne est supérieur à une différence prédéterminée,
dans lequel le dispositif de comparaison (14) est une électronique de commande (18) comportant au moins un microprocesseur (19) et un dispositif mémoire, et
dans lequel l'électronique de commande (18) est conçue pour mémoriser une valeur de courant de consigne correspondante et pour la comparer à une valeur de courant réelle correspondante.

4. Module (15) de surveillance et de commande selon la revendication 3, **caractérisé en ce que** le module (15) de surveillance et de commande est intégré à l'APE (6) dans un boîtier.

5. Module (15) de surveillance et de commande selon l'une quelconque des revendications précédentes 3 ou 4, **caractérisé en ce que** le dispositif de surveillance de tension (11) est conçu sous la forme d'un voltmètre à balayage continu.

6. Module (15) de surveillance et de commande selon l'une quelconque des revendications précédentes 3 à 5, **caractérisé en ce que** l'appareil de mesure de courant (13) est conçu sous la forme d'un ampèremètre (17) numérique.

7. Module (15) de surveillance et de commande selon l'une quelconque des revendications 3 à 6, **caractérisé en ce que** le dispositif de commutation (12) est un relais (20) commandé par l'électronique de commande (18) .

8. Module (15) de surveillance et de commande selon l'une quelconque des revendications 3 à 6, **caractérisé en ce que** le dispositif de commutation (12) est un dispositif de commutation à semi-conducteur (21) à MOS-FET ou IGBT commandé par l'électronique de commande (18) .

9. Module (15) de surveillance et de commande selon l'une quelconque des revendications précédentes 3 à 8, **caractérisé en ce que** la durée entre la mise hors et la remise sous tension d'alimentation est dans la plage comprise entre 10 ms et 1 000 ms.

10. Module (15) de surveillance et de commande selon l'une quelconque des revendications précédentes 3 à 9, **caractérisé en ce que** la durée entre la mise hors et la remise sous tension d'alimentation est dans la plage comprise entre 200 ms et 500 ms.

11. Installation d'éclairage de sécurité comprenant
- une pluralité de consommateurs (5) électriques,
- un dispositif de commande (22) central,
- des lignes d'alimentation (3, 4) électriques, et
- une alimentation en tension (2),
dans laquelle les lignes d'alimentation (3, 4) électriques alimentent la pluralité de consommateurs (5) électriques,
dans laquelle la pluralité de consommateurs (5) électriques sont connectés au dispositif de commande (22) central par l'intermédiaire des lignes d'alimentation électriques et au moyen desquelles l'alimentation en tension de l'alimentation en tension (2) est effectuée,
dans laquelle chacun de la pluralité de consommateurs (5) électriques comprend un moyen d'éclairage (7) et un module (15) de surveillance et de commande, disposé entre le moyen d'éclairage (7) et les lignes d'alimentation (3, 4) électriques, comportant un appareil de préenclenchement (6) électronique associé,
dans laquelle le module (15) de surveillance et de commande est conçu selon l'une quelconque des revendications 3 à 10, et
dans laquelle les consommateurs (5) électriques sont des moyens d'éclairage d'urgence, des moyens d'éclairage de sécurité ou des moyens d'éclairage de signalisation d'issue de secours.
